# EUROPEAN PATENT SPECIFICATION

(11) **EP 2 089 478 B1**
(45) Date of publication and mention of the grant of the patent: **27.01.2016**
(21) Application number: 07847321.2
(22) Date of filing: 26.11.2007
(51) Int. Cl.: C09C 1/00

(54) **SURFACE-MODIFIED (EFFECT) PIGMENTS**
OBERFLÄCHENMODIFIZIERTE (EFFEKT-) PIGMENTE
PIGMENTS (À EFFETS) MODIFIÉS EN SURFACE

(30) Priority: 05.12.2006 EP 06125442; 25.01.2007 EP 07101132
(43) Date of publication of application: 19.08.2009
(73) Proprietor: BASF SE, 67056 Ludwigshafen (DE)
(72) Inventor: IWASA, Kazuhisa, Taito-ku Tokyo 110-0012 (JP); HAHN, Marcel, 4312 Magden (CH); BUGNON, Philippe, 1724 Le Mouret (CH)
(74) Representative: Zumstein, Angela
(86) International application number: PCT/EP2007/062780
(87) International publication number: WO 2008/068152

(56) References cited:
- EP-A2- 0 505 086
- WO-A-98/30637
- WO-A-2006/066825
- WO-A2-02/42381

## Description

The invention relates to pigment based on (multiple) coated platelet-shaped substrates comprising an outer layer which is obtained by treatment with a metal oxide/hydroxide and then a phosphate ester, or phosphonate, or a salt thereof, with the proviso that the phosphate ester, or phosphonate do not contain fluorine, to a method for producing said pigments and the use thereof.

It is known that titanium dioxide particles present as the pigment component in a coating material cause oxidative decomposition of the polymer on exposure to ultraviolet rays and moisture, which is known as whitening. In order to suppress this effect of titanium dioxide, it has been proposed to coat or dope titanium dioxide with compounds of chromium, silicon, aluminium, zinc, phosphorus or zirconium.

EP0268918 describes a weathering-resistant pearl lustre pigment having a hydrated zirconium oxide coating on the titanium dioxide base pigment, this coating being obtained by hydrolysis of a zirconium salt in the presence of a hypophosphite.

EP0342533 describes a weathering-resistant pearl lustre pigment having, on the titanium dioxide base pigment, a top layer which consists of hydrated zirconium oxide, obtained by hydrolysis in the presence of a hypophosphite, and a hydrated metal oxide. The metal oxide can be cobalt oxide, manganese oxide or cerium oxide.

The modified pearl lustre pigments possess sufficient dispersibility and weathering resistance in nonaqueous coating systems. However, they are unsuitable for use in water-thinable coating systems, since they cause the formation of microfine bubbles in the coating film which significantly increase light scattering and thus have an adverse effect on lustre and colour. In addition, the distinctness of image (DOI) is severely reduced and the regeneration capacity of the coating film is impaired.

US4435220 discloses transparent, colored pigments based on platelet-shaped, transparent substrates, such as mica, talc or glass, which are coated with colored metal oxides or metal hydroxides, wherein the metal oxide or hydroxide layer contains 0.1-5% by weight of an alkaline earth metal compound to impart the pigments improved dispersibility, gloss, color power and stability to heat and weathering and also filling and adhesion properties.

US3650790 discloses nacreous pigments exhibiting intense interference colors, reduced milkiness and substantial luster which are prepared by depositing a thin layer of titanium dioxide on mica flakes, treating the resulting titanium dioxide-coated mica pigment with a soluble silicate in an aqueous slurry at a pH from 7 to 11.5, and calcining the resulting silicate-treated pigment; and the resulting pigment. The pigments disclosed in US3650790 are not sufficiently stabilised against UV light.

EP0446986 relates to metal oxide coated mica pigments with enhanced light and moisture stability having on the particle surfaces a coating of hydrous aluminum oxide.

EP0632109 relates to a pearl lustre pigment comprising a platelet-like substrate coated with a layer of metal oxides and, atop the metal oxide layer, a top layer, said top layer consisting of silicon dioxide, at least one further metal hydroxide or metal oxide hydrate, and at least one organic coupling reagent. The further metal hydroxides or metal oxide hydrates are hydroxides or oxyhydrates of cerium, aluminium and zirconium or mixtures thereof. The coupling reagents used are organofunctional silanes, zirconium aluminates or esters of metal acids. According to EP0888410 not more than 60% of the coupling reagents added can be bound to the pigment surface, as a result of which it is necessary to make a corresponding increase in the material employed. The non-coupled fractions remain in the reaction medium and impair the filterability of the pigment.

EP0888410 discloses modified nacreous lustre pigments for water paint systems which are based on a plate-like substrate coated with metal oxides and a covering layer located on the top metal oxide layer. The covering layer is made of at least two oxides, a mixture of oxides and/or mixed oxides from the group of silicium dioxide, aluminium oxide, cerium oxide, titanium oxide and zirconium oxide, and of a water-based oligomer silane system.

EP1084198 relates to an effect pigment coated with surface modifying agents in which the starting pigment comprises a layer having at least one reactive surface modifying agent. The surface modifying agent is a compound which is chemically bound to the initial pigment by at least two functional groups which are different from one another and which are separated by a spacer. The pigments described in EP1084198 possess improved adhesion of the pigments in the base lacquer layer due to the surface modification. However, EP1084198 does not disclose pearlescent pigments which are weather resistance and have stability against UV light.

WO2006021388 relates to pearlescent pigments comprising a metal oxide-containing, lamellar substrate and a protective layer, the metal oxide having a refractive index of more than 1.8. The protective layer is composed of an organic-chemical surface-modified SiO₂ layer, the organic-chemical surface modification being applied to the SiO₂ layer.

US4209430 relates to a process for suppressing yellowing in thermoplastic polyolefins containing a phenolic anti-oxidant and TiO₂ pigment by adding a phosphorylated polyene either directly to the polyolefin or as a coating on the pigment. The phosphorylated polyene is the reaction product of a phosphorylating agent and a polyene (a polyolefinically unsaturated compound).

EP0644242 discloses compositions comprising (a) a polyolefin; (b) an antioxidant; and (c) mica particles, the surface of which is coated with a first layer of titanium dioxide followed by a second layer of a calcined coating of silica and alumina for preventing yellowing in antioxidant-containing polyolefin compositions.

WO9858017 (US5951750) relates to a composition comprising a polyolefin; an antioxidant; and a pearlescent pigment comprising mica particles having on a surface thereof a first layer of a coating of titanium dioxide and a second layer thereon of a coating of calcined metal compound selected from the group consisting of the oxides and phosphorous compounds of Mg, Ca, Ce, Zn, Y and doped ZrO₂ in which the dopant is Y, Ca or Ce. The calcined overcoating prevents yellowing of the compositions. The phosphorous compound is preferably a phosphate but can be a phosphite.

EP0505086 discloses a method for the treatment of a lamellar or flaky pigment or extender which comprises forming a zinc phosphate coating on the surface of the particles of the material by the steps of a) coating the particles of the material with zinc oxide or zinc hydroxide by contacting the material with a solution of a zinc salt in sodium or potassium hydroxide, the solution having a pH of 11 or above, at a temperature in the range of from 50 to 100 °C, whereby a deposit of zinc oxide or zinc hydroxide is formed on the surface of the particles; and b) converting the zinc oxide or zinc hydroxide to zinc phosphate by treatment of the zinc oxide or zinc hydroxide coated material with an acidic phosphate solution, or phosphoric acid.

US4482389 relates to nacreous pigments which have improved stability to weathering and are based on mica flakes coated with metal oxides, which are provided with a stabilizing, chromium-containing second coating which comprises a combination of metal salts. To form the second layer, iron and/or manganese are deposited on the starting pigments in the form of the hydroxide, carbonate or phosphate and chromium is deposited on the starting pigments in the form of the hydroxide, carbonate or phosphate or as methacrylato-chromium chloride.

EP0757085 discloses pearl pigments which comprise a flake substrate, titanium oxide coated on the surface thereof, and a phosphoric acid metal compound, or a phosphoric acid metal compound and a metal oxide coated on the surface of particles coated with titanium oxide. The pigments are excellent in discoloration resistance and in affinity (dispersibility) with resins. "The phosphoric acid metal compound" and "the phosphoric acid metal compound and the metal oxide" mean the final state, that is, the hydrolysis products of phosphoric acid or a phosphate compound and various metal salts.

EP1479731 relates to a novel effect pigment based on substrates comprising at least one layer, which consists of a coloured complex phosphate system, the production of these pigments and their use. The complex phosphate system has the formula AₚB_{q}PₓO_{y} with A = ammonium, metals of group 1, 2, 11 and/or 12 of the periodic table, B = elements of group 3 to 15 of the periodic table, lanthanides and/or actinides, p = 1,2, ....r, q = 1,2,....s, x = 1,2....n, and y = 2,....m.

EP1479730 relates to a novel effect pigment based on substrates comprising at least one layer, which consists of a binary phosphate system, the production of these pigments and their use. The binary phosphate system has the formula AₓP_{y}O_{z} with A = elements of group 1 to 14 of the periodic table, lanthanides or actinides, x = 1, 2....n, y = 1, 2,....m, defined through the poly- or pyrophosphate structure, z is defined through the phosphorus valence and the valence of the A-cation.

WO02064682 relates to a flaky pigment excellent in leafing properties and in adhesion between pigment particles and a coating (resin) which is obtained by coating the surface of the flaky pigment with a coupling agent and an organic compound having a perfluoroalkyl group, such as a phosphate having a perfluoroalkyl group. Examples of phosphates having a perfluoroalkyl group are compounds of formula: [Rf(CₙH₂ₙO)ₘ]_{y}PO(OM)_{3-y}, wherein Rf represents a straight-chain or branched C₆-C₂₁perfluoroalkyl group or perfluoroalkyloxy group, M represents hydrogen, an alkali metal, ammonium and substituted ammonium, n is from 1 to 4, m is from 0 to 10, and y is from 1 to 3; (RfSO₂NRCₙH₂ₙO)_{y}PO(OM)_{3-y}, wherein Rf represents a straight-chain or branched C₆-C₂₁perfluoroalkyl group or perfluoroalkyloxy group, M represents hydrogen, an alkali metal, ammonium or substituted ammonium. The coupling agent is preferably one or more members selected from a silane coupling agent, a titanium-based coupling agent and a zirconium-based coupling agent.

EP1090963 relates to a highly orientated flaky pigment being excellent in plane orientation (leafing effect), wherein a hydrated metal oxide and one or more fluorine-containing phosphates represented by the general formulae (RfCₙH₂ₙO)ₘPO(OM)₃₋ₘ (A) and (RfSO₂NRCₙH₂ₙO)ₘPO(OM)₃₋ₘ (B) or salts thereof are covered on the surface of a flaky pigment with a pearl gloss, wherein Rf is the same or different and represents linear or branched C₃-C₂₁perfluoroalkyl group or perfluoroxyalkyl group, n is 1 to 12, m is 1 to 3, M represents hydrogen, alkali metal, ammonium group or substituted ammonium group, and R represents hydrogen or C₁-C₃alkyl group.

WO9830637 relates to composite pigments, which consist of a colourant and a substrate, using a substrate (S) and a colourant (C), which are each coated with ions or ionisable compounds having a charge rotating in the same direction, and, if desired, of additional ions or ionisable compounds having a charge rotating in the same direction as layer material (L), wherein either (I) the sign of the charge of the coating of S, or the sign of the charge of the coating of S and of the charge of L, which is the same, is opposite to that of charge of the coating of C, or (II) the sign of charges of the coatings of S and C is the same and is opposite to that of the charge of L. In preferred embodiment of WO9830637, titanium dioxide-coated mica pigments are first dispersed with HO-SiMe₂-(CH₂)₃-P(O)(OH)₂, and are then aftertreated first with Zr⁴⁺, then with an inorganic phosphate, subsequently adding a polyallylamine hydrochloride solution, usually at room temperature, so that the substrate has a positively charged surface. After coating the coated substrate so obtained is filtered and washed. A coated colourant having a negatively charged surface is then usually added to the aqueous dispersion of the coated substrate, preferably 1,4-diketo2,5-dihydropyrrolo-[3,4-c]pyrroles ("DPP") coated with zirconium phosphate and, if desired, substituted in 3- and 6-position by alkyl or aryl.

WO0242381 discloses pigments comprising a pigmentary base that has been treated with the products resulting from the reaction of organic alcohols and either P₂0₅ or phosphoric acid, wherein said products are present in an amount from about 0.01 percent to about 5 percent by weight based on the weight of the pigmentary base. Examples of pigmentary bases include titanium dioxide, kaolin, talc, mica and calcium carbonate. The pigmentary base titanium dioxide may be further treated with additional metal oxides, such as aluminum oxide, silicon dioxide, zirconium oxide.

It is the object of the present invention to provide metal oxide coated flaky pigments having an effective protective layer. In particular, the protective layer shall provide effective protection against the photocatalytic activity of the pigment induced by ultraviolet rays without influencing the optical properties of the pigment. In addition, the pigments shall have excellent weathering stability and suppress yellowing in thermoplastic polyolefins containing a phenolic anti-oxidant.

Said object has been solved by a pigment based on (multiple) coated platelet-shaped substrates comprising an outer layer which is obtained by treatment with a metal oxide/hydroxide and then a phosphate ester, or phosphonate, or a salt thereof, with the proviso that the phosphate ester, or phosphonate do not contain fluorine.

The outer layer provides a very good photo-stabilisation of the TiO₂ coated platelet-shaped substrates, such as mica, combined with a good water resistance and an anti-yellowing performance, making the product usable in high grade plastics (anti yellowing effect) as well as in high grade coating (automotive)

The pigment comprises
(A) platelet-shaped substrate;
(B) a titanium dioxide layer;
(C) an outer layer on top of layer (B) which is obtained by treatment with a metal oxide/hydroxide and a phosphate ester, or phosphonate, or a salt thereof.

Examples of salts of phosphate esters, or phosphonates are salts thereof with an alkali metal, ammonia, amine, alkanolamine or quaternary ammonium compound.

Suitable platelet-shaped substrates are transparent, partially reflectant, or reflectant. Examples thereof are natural micaceous iron oxide (for example as in WO 99/48634), synthetic and doped micaceous iron oxide (for example as in EP-A 0 068 311), mica (biotite, vermiculite, sericite, muscovite, phlogopite, fluorophlogopite, kaolinite or related, or any synthetic mica, such as synthetic fluorophlogopite), basic lead carbonate, flaky barium sulfate, MoS₂, SiO₂, Al₂O₃, TiO₂, glass, ZnO, ZrO₂, SnO₂, BiOCl, chromium oxide, BN, MgO flakes, Si₃N₄, and graphite. Particularly preferred substrates are mica, SiO₂ flakes, Al₂O₃ flakes, TiO₂ flakes, and glass flakes.

Another preferred embodiment is the use of flat metallic particles as the core. Examples of suitable metallic particles are flakes of Ag, Al, Au, Cu, Cr, Fe, Ge, Mo, Ni, Si, Ti, or alloys thereof, such as brass or steel, preferably Al flakes. Depending on the material, a natural optically non-interfering oxide layer may form on the surface of metallic particle. Partially reflecting cores have preferably a reflectance of at least 35% of the light falling vertically on its surface in the range from 380 to 800 nm.

Additional examples of plateletlike substrates are plateletlike organic pigments, such as chinacridones, phthalocyanine, fluororubine, red perylenes or diketopyrrolopyrroles. Platelet-like particles coated with metal oxide layers and their use as effect pigments are generally known per se, for example from DE 14 67 468, EP 0 045 851, DE 32 37 264, DE 36 17 430, EP 0 298 604, EP 0 388 932 and EP 0 402 943.

The outer layer (protective layer) is suitable for the stabilisation of metal oxide-coated, especially titanium dioxide-coated platelet-shaped substrates. Examples thereof are pearlescent pigments (including those which react under the fluidized bed conditions to nitrides, oxynitrides or by reduction to suboxides etc.) (for example EP-A-9739066, EP-A-0948571, WO99/61529, EP-A-1028146, EP-A-0763573, US-A-5,858,078, WO98/53012, WO97/43348, US-B-6,165,260, DE-A-1519116, WO97/46624, EP-A-0509352); pearlescent multilayer pigments (for example EP-A-0948572, EP-A-0882099, US-A-5,958,125, 6,139,613), especially metal oxide-coated mica platelets which are commercially available unter the names Iriodin® (E. Merck, Darmstadt), Flonac® (Kemira Oy, Finland), Mearlin® (Mearl Corporation, New York/USA) and Infinite Color® (Shisheido, Japan), and coated metal flakes, such as, for example, titanium dioxide coated metal flakes. The size of the core particles is not critical per se and can be adapted to the particular use. Generally, the particles have a length from about 1 to 200 µm, in particular from about 5 to 100 µm, and thicknesses from about 0.05 to 5 µm, preferably from 0.1 to 2 µm. Particles having a platelet-like shape are understood to be such having two essentially flat and parallel surfaces, with an aspect ratio length to thickness of from about 2:1 to about 1000:1, and a length to width ratio of from 3:1 to 1:1.

Preferred are platelet-like particles on basis of a transparent substrate having a low index of refraction, especially natural, or synthetic mica, another layered silicate, glass, Al₂O₃, SiO₂, especially SiO₂, SiO₂/SiOₓ/SiO₂ (0.03 ≤ x ≤ 0.95), SiO_{1.40-2.0}/SiO_{0.70-0.99}/SiO_{1.40-2.0}, or Si/SiO_{z} with 0.70 ≤ z ≤ 2.0, especially 1.40 ≤ z ≤ 2.0, having on top of the substrate a titanium oxide layer. It is possible to obtain pigments that are more intense in colour and more transparent by applying, on top of the TiO₂ layer, a metal oxide of low refractive index, such as SiO₂, Al₂O₃, AIOOH, B₂O₃ or a mixture thereof, preferably SiO₂, and applying a further TiO₂ layer on top of the latter layer (EP-A-892832, EP-A-753545, WO93/08237, WO98/53011, WO9812266, WO9838254, WO99/20695, WO00/42111, and EP-A-1213330). The outermost titanium oxide layer can be stabilised by the outer layer (protective layer) of the present invention.
Pigments having the following layer structure are especially preferred:

| | | | |
|---|---|---|---|
| TRASUB | TiO₂ | | |
| TRASUB | TiO₂/Fe₂O₃ | | |
| TRASUB | Fe₂TiO₅ | | |
| TRASUB | TiO₂ | SiO₂ | TiO₂ |
| TRASUB | TiO₂ | SiO₂ | TiO₂/Fe₂O₃ |
| TRASUB | (Sn,Sb)O₂ | SiO₂ | TiO₂ |
| TRASUB | TiO₂/Fe₂O₃ | SiO₂ | TiO₂/Fe₂O₃ |
| TRASUB | Cr₂O₃ | SiO₂ | TiO₂ |
| TRASUB | Fe₂O₃ | SiO₂ | TiO₂ |
| TRASUB | TiO suboxides | SiO₂ | TiO suboxides |
| TRASUB | TiO₂ | SiO₂ | TiO₂ + SiO₂ + TiO₂ |
| TRASUB | TiO₂ + SiO₂ + TiO₂ | SiO₂ | TiO₂ + SiO₂ + TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/ TiO₂ |
| TRASUB | STL | TiO₂ | |

wherein TRASUB is a transparent, or semitransparent substrate having a low index of refraction, especially natural, or synthetic mica, another layered silicate, glass, Al₂O₃, SiO_{z}, especially SiO₂, SiO₂/SiOₓ/SiO₂ (0.03 ≤ x ≤ 0.95), SiO_{1.40-2.0}/SiO_{0.70-0.99}SiO_{1.40-2.0}, or Si/SiO_{z} with 0.70 ≤ z ≤ 2.0, especially 1.40 ≤ z ≤ 2.0, and
STL is a semi-transparent layer, such as, for example, a semi-transparent metal layer of Cu, Ag, Cr, or Sn, or a semitransparent carbon layer.

The metal oxide/hydroxide of the outer layer is selected from oxides/hydroxides of silicon (silicon oxide, silicon oxide hydrate), aluminium, zirconium, magnesium, calcium, iron(III), yttrium, cerium, zinc and combinations thereof.

The metal oxide/hydroxide is present in an amount of from 0.1 to 10 % by weight, preferably 0.8 to 4 % by weight based on the weight of the (multiple) coated platelet-shaped substrates.

In a preferred embodiment of the present invention the metal oxide/hydroxide is an oxide/hydroxide of aluminium (aluminum oxide, aluminum oxide hydrate), zirconium ((hydrated) zirconium dioxide), or a mixture thereof. Aluminium oxides/hydroxides are preferred for coloristics and stabilisation; zirconium oxides/hydroxides are preferred for stabilisation and the best is their combination for stabilisation and coloristics.

Ternary mixtures of zirconium oxide, aluminum oxide and zinc oxide, or zirconium oxide, aluminum oxide and magnesium oxide show also excellent results.

If used in combination, the metal oxide/hydroxide layer can be prepared by adding the two, or more salts of the corresponding metal oxides/hydroxides simultaneously or sequentially.

Examples of the phosphate ester are polyoxyethylenated alkyl ether phosphates, such as, for example, phosphate esters (phosphoric acid esters) of polyC₂-C₄alkylene glycolmonoethers and/or a polyC₂-C₄alkylene glycol monoesters of a carboxylic acid.

This refers, for example, to the polyoxyethylenated alkyl phosphates of formula: 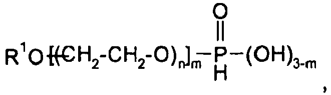 or salts thereof, wherein R¹, which may be identical or different in each occuring, represents a linear or branched alkyl radical, in particular of 1 to 20 carbon atoms; a phenyl radical; an alkylaryl radical, more particularly an alkylphenyl radical, with, in particular, an alkyl chain of 8 to 12 carbon atoms; an arylalkyl radical, more particularly a phenylaryl radical; it being possible for n, the number of ethylene oxides, to range from 2 to 12, for example, and m is 1, 2, or 3. R¹ can in particular be a hexyl, octyl, decyl, dodecyl, oleyl or nonylphenyl radical. Most preferred is a compound, wherein n is 6, 7, or 8, R¹ is methyl and m is 1, or 2.

Additional examples of compounds of this type which may be mentioned are those sold under the brand names Lubrophos® and Rhodafac® sold by Rhodia, and in particular the products below: the polyoxyethylene (C₈-C₁₀)alkyl ether phosphates Rhodafac® RA 600, the polyoxyethylene tridecyl ether phosphate Rhodafac® RS 710 or RS 410, the polyoxyethylene oleocetyl ether phosphate Rhodafac® PA 35, the polyoxyethylene nonylphenyl ether phosphate Rhodafac® PA 17, the polyoxyethylene (branched)nonyl ether phosphate Rhodafac® RE 610.

In addition, phosphate esters are any materials of the general formula: 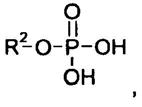 or 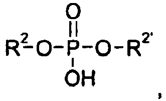 or salts thereof, wherein R² and R²' are C₆₋₂₀alkyl or ethoxylated alkyl groups. Preferably R² and R²' are of the general formula: alkyl-(OCH₂CH₂)_{Y} wherein the alkyl substituent is C₁₂-C₁₈ and Y is between 0 and about 4. Most preferably the alkyl substituent of that formula is C₁₂-C₁₈ and Y is between about 2 and about 4. It will be appreciated that the formula depicted represent mono- and di-esters, and commercial phosphate esters will generally comprise mixtures of the mono- and di-esters, together with some proportion of triester.

Especially suitable phosphate esters are EFKA-5066, EFKA-5070, EFKA-5207, EFKA-5244, EFKA-6220, EFKA-6225, EFKA-6230, EFKA-8503, EFKA-8510, EFKA-8511, EFKA-8512, EFKA-8530, EFKA-8531, EFKA-8532 (Ciba Speciality Chemicals), Rhodafac® PA23 (ex Rhodia), a polyoxyethylenated alkyl ether phosphate, and Phospholan® PE 169 (AKZO-NOBEL).

In another preferred embodiment the phosphate ester, or phosphonate is an alkyl or alkylaryl phosphate ester, such as Rhodafac® PA15, or a polyarylpolyetherphosphate, such as Phospholan® PR221T (ex Akzo Nobel), or an alkyl phosphonic acid, such as Rhodafac® ASI 80 (ex Rhodia), or a polymer of polyvinyl-methylphosphinic acid and, in particular, polyvinyl-phosphonic acid, including copolymers of vinylphosphonic acid and/or vinylmethylphosphinic acid with other monomers, such as acrylic acid, acrylamide and vinyl acetate, such as Albritect® CP30 (ex Rhodia).

The metal oxide/hydroxide is in general present in an amount of from 0.1 to 10 % by weight, preferably 0.8 to 4 % by weight based on the weight of the (multiple) coated platelet-shaped substrates. The phosphate ester, or phosphonate is in general present in an amount of from 0.1 to 10 % by weight, preferably 1 to 6 % by weight based on the weight of the (multiple) coated platelet-shaped substrates.

In addition, the present invention relates to a process for producing the pigment of the present invention, characterized in that
(a) a flaky (pearl) pigment is suspended in water, the pH of the suspension is adjusted to about 3, then an aqueous solution of one or more metals salts selected from silicon, aluminium, zinc, calcium, magnesium, zirconium, iron(III), yttrium and cerium is added to the suspension while keeping its pH constant with an aqueous alkali solution, and after addition, its pH is adjusted to about 7 to 8.5, and
(b) an aqueous solution of the phosphate ester, or phosphonate or salts thereof is added to the resulting suspension under stirring, and after addition, its suspension is filtered, washed with water and dried.

These (hydrated) metal oxides can be coated on the flaky (pearl) pigment by subjecting aqueous solutions of their corresponding metal salts such as chlorides, sulfates, nitrates, halides and oxy halides as the starting materials to alkali hydrolysis.

The amount of the metal salt forming the hydrated metal oxide used in the present invention suffices insofar it can form a monolayer of the hydrated metal oxide on the surface of the flaky pigment. Accordingly, if the specific surface area of the flaky pearl pigment is large, a large amount of the metal salt is necessary, whereas for a small specific surface area, a small amount suffices. Further, a large amount of the metal salt is unpreferable because this causes the change of in the color tone (hue, chroma, luster) of the flaky pearl pigment and further agglomeration of pigment particles occurs easily. Usually, the amount of the metal salt can be varied depending on the specific surface area of the flaky pearl pigment, and this amount can be determined in the range of 0.1 to 10 % by weight relative to the flaky pearl pigment.

The complete process is conducted at a temperature between 10 and 90°C, preferably at a temperature between 60 and 90°C.

Aluminium is the preferred for coloristics and stabilisation; zirconium for stabilisation and the best is their combination for stabilisation and coloristics.

Preferred precursors of aluminium oxide, or hydroxide are the chloride, nitrate or sulphate of aluminium. Preferred precursors of zirconium oxide, or hydroxide are the oxychloride, nitrate or sulfate of zirconium. In combination the two salts can be added simultaneously or sequentially.

The optimum pH is pH 3 which is changed after the addition of the metal salt to pH 7 or more.

The phosphate ester (phosphoric acid esters) or phosphonate is added after the pH change at pH 7 to pH 8.5. The phosphate esters are preferred.

Now, the process for producing the highly orientated flaky pigment according to the present invention is described in more detail.

First, an aqueous suspension of the flaky (pearl) pigment is prepared, and the pH of the suspension is adjusted using an acidic aqueous solution or an alkaline aqueous solution to a predetermined pH value of about 3. The pH value for this hydrolysis is varied depending on the type of a metal salt used in the present invention. To the suspension under stirring is added a separately prepared solution of the salt, during of which the pH in the suspension is kept constant. The pH is changed after the addition from pH 3 to neutral.

The solution of the phosphate ester, or phosphonate or salts thereof is added dropwise to the product obtained in step a). During this coating treatment, the solution is adjusted to pH and temperature which are suitable for each material to be handled, and each material is stirred so that the pigment is uniformly coated therewith. After the coating treatment, the pigment is filtered, washed with water and dried in a usual manner, such as, for example, dried in an oven at temperatures between 100°C and 150°C, to give the desired pigment.

The (effect) pigments according to the invention can be used for all customary purposes, for example for colouring polymers in the mass, coatings (including effect finishes, including those for the automotive sector) and printing inks (including offset printing, intaglio printing, bronzing and flexographic printing), and also, for example, for applications in cosmetics, in ink-jet printing, for dyeing textiles, glazes for ceramics and glass as well as laser marking of papers and plastics. Such applications are known from reference works, for example "Industrielle Organische Pigmente" (W. Herbst and K. Hunger, VCH Verlagsgesellschaft mbH, Weinheim/New York, 2nd, completely revised edition, 1995).
When the pigments according to the invention are interference pigments (effect pigments), they are goniochromatic and result in brilliant, highly saturated (lustrous) colours. They are accordingly very especially suitable for combination with conventional, transparent pigments, for example organic pigments such as, for example, diketopyrrolopyrroles, quinacridones, dioxazines, perylenes, isoindolinones etc., it being possible for the transparent pigment to have a similar colour to the effect pigment. Especially interesting combination effects are obtained, however, in analogy to, for example, EP-A-388 932 or EP-A-402 943, when the colour of the transparent pigment and that of the effect pigment are complementary.
The pigments according to the invention can be used with excellent results for pigmenting high molecular weight organic material.
The high molecular weight organic material for the pigmenting of which the pigments or pigment compositions according to the invention may be used may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.
From the series of the polyaddition resins and polycondensation resins there may be mentioned, for example, condensation products of formaldehyde with phenols, so-called phenoplasts, and condensation products of formaldehyde with urea, thiourea or melamine, so-called aminoplasts, and the polyesters used as surface-coating resins, either saturated, such as alkyd resins, or unsaturated, such as maleate resins; also linear polyesters and polyamides, polyurethanes or silicones.
The said high molecular weight compounds may be present singly or in mixtures, in the form of plastic masses or melts. They may also be present in the form of their monomers or in the polymerised state in dissolved form as film-formers or binders for coatings or printing inks, such as, for example, boiled linseed oil, nitrocellulose, alkyd resins, melamine resins and urea-formaldehyde resins or acrylic resins.
Depending on the intended purpose, it has proved advantageous to use the effect pigments or effect pigment compositions according to the invention as toners or in the form of preparations. Depending on the conditioning method or intended application, it may be advantageous to add certain amounts of texture-improving agents to the effect pigment before or after the conditioning process, provided that this has no adverse effect on use of the effect pigments for colouring high molecular weight organic materials, especially polyethylene. Suitable agents are, especially, fatty acids containing at least 18 carbon atoms, for example stearic or behenic acid, or amides or metal salts thereof, especially magnesium salts, and also plasticisers, waxes, resin acids, such as abietic acid, rosin soap, alkylphenols or aliphatic alcohols, such as stearyl alcohol, or aliphatic 1,2-dihydroxy compounds containing from 8 to 22 carbon atoms, such as 1,2-dodecanediol, and also modified colophonium maleate resins or fumaric acid colophonium resins. The texture-improving agents are added in amounts of preferably from 0.1 to 30 % by weight, especially from 2 to 15 % by weight, based on the end product.
The (effect) pigments according to the invention can be added in any tinctorially effective amount to the high molecular weight organic material being pigmented. A pigmented substance composition comprising a high molecular weight organic material and from 0.01 to 80 % by weight, preferably from 0.1 to 30 % by weight, based on the high molecular weight organic material, of an pigment according to the invention is advantageous. Concentrations of from 1 to 20 % by weight, especially of about 10 % by weight, can often be used in practice.
High concentrations, for example those above 30 % by weight, are usually in the form of concentrates ("masterbatches") which can be used as colorants for producing pigmented materials having a relatively low pigment content, the pigments according to the invention having an extraordinarily low viscosity in customary formulations so that they can still be processed well.
For the purpose of pigmenting organic materials, the effect pigments according to the invention may be used singly. It is, however, also possible, in order to achieve different hues or colour effects, to add any desired amounts of other colour-imparting constituents, such as white, coloured, black or effect pigments, to the high molecular weight organic substances in addition to the effect pigments according to the invention. When coloured pigments are used in admixture with the effect pigments according to the invention, the total amount is preferably from 0.1 to 10 % by weight, based on the high molecular weight organic material. Especially high goniochromicity is provided by the preferred combination of an effect pigment according to the invention with a coloured pigment of another colour, especially of a complementary colour, with colorations made using the effect pigment and colorations made using the coloured pigment having, at a measurement angle of 10°, a difference in hue (ΔH*) of from 20 to 340, especially from 150 to 210.
Preferably, the effect pigments according to the invention are combined with transparent coloured pigments, it being possible for the transparent coloured pigments to be present either in the same medium as the effect pigments according to the invention or in a neighbouring medium. An example of an arrangement in which the effect pigment and the coloured pigment are advantageously present in neighbouring media is a multi-layer effect coating.
The pigmenting of high molecular weight organic substances with the pigments according to the invention is carried out, for example, by admixing such a pigment, where appropriate in the form of a masterbatch, with the substrates using roll mills or mixing or grinding apparatuses. The pigmented material is then brought into the desired final form using methods known *per se*, such as calendering, compression moulding, extrusion, coating, pouring or injection moulding. Any additives customary in the plastics industry, such as plasticisers, fillers or stabilisers, can be added to the polymer, in customary amounts, before or after incorporation of the pigment. In particular, in order to produce non-rigid shaped articles or to reduce their brittleness, it is desirable to add plasticisers, for example esters of phosphoric acid, phthalic acid or sebacic acid, to the high molecular weight compounds prior to shaping.
For pigmenting coatings and printing inks, the high molecular weight organic materials and the effect pigments according to the invention, where appropriate together with customary additives such as, for example, fillers, other pigments, siccatives or plasticisers, are finely dispersed or dissolved in the same organic solvent or solvent mixture, it being possible for the individual components to be dissolved or dispersed separately or for a number of components to be dissolved or dispersed together, and only thereafter for all the components to be brought together.
Dispersing an effect pigment according to the invention in the high molecular weight organic material being pigmented, and processing a pigment composition according to the invention, are preferably carried out subject to conditions under which only relatively weak shear forces occur so that the effect pigment is not broken up into smaller portions.
Plastics comprising the pigment of the invention in amounts of 0.1 to 50 % by weight, in particular 0.5 to 7 % by weight. In the coating sector, the pigments of the invention are employed in amounts of 0.1 to 10 % by weight. In the pigmentation of binder systems, for example for paints and printing inks for intaglio, offset or screen printing, the pigment is incorporated into the printing ink in amounts of 0.1 to 50 % by weight, preferably 5 to 30 % by weight and in particular 8 to 15 % by weight.

The colorations obtained, for example in plastics, coatings or printing inks, especially in coatings or printing inks, more especially in coatings, are distinguished by excellent properties, especially by extremely high saturation, outstanding fastness properties, high color purity and high goniochromicity.

When the high molecular weight material being pigmented is a coating, it is especially a speciality coating, very especially an automotive finish.
The effect pigments according to the invention are also suitable for making-up the lips or the skin and for colouring the hair or the nails.
The invention accordingly relates also to a cosmetic preparation or formulation comprising from 0.0001 to 90 % by weight of a pigment, especially an effect pigment, according to the invention and from 10 to 99.9999 % of a cosmetically suitable carrier material, based on the total weight of the cosmetic preparation or formulation.
Such cosmetic preparations or formulations are, for example, lipsticks, blushers, foundations, nail varnishes and hair shampoos.
The pigments may be used singly or in the form of mixtures. It is, in addition, possible to use pigments according to the invention together with other pigments and/or colorants, for example in combinations as described hereinbefore or as known in cosmetic preparations.
The cosmetic preparations and formulations according to the invention preferably contain the pigment according to the invention in an amount from 0.005 to 50 % by weight, based on the total weight of the preparation.
Suitable carrier materials for the cosmetic preparations and formulations according to the invention include the customary materials used in such compositions.
The cosmetic preparations and formulations according to the invention may be in the form of, for example, sticks, ointments, creams, emulsions, suspensions, dispersions, powders or solutions. They are, for example, lipsticks, mascara preparations, blushers, eye-shadows, foundations, eyeliners, powder or nail varnishes.
If the preparations are in the form of sticks, for example lipsticks, eye-shadows, blushers or foundations, the preparations consist for a considerable part of fatty components, which may consist of one or more waxes, for example ozokerite, lanolin, lanolin alcohol, hydrogenated lanolin, acetylated lanolin, lanolin wax, beeswax, candelilla wax, microcrystalline wax, carnauba wax, cetyl alcohol, stearyl alcohol, cocoa butter, lanolin fatty acids, petrolatum, petroleum jelly, mono-, di- or tri-glycerides or fatty esters thereof that are solid at 25°C, silicone waxes, such as methyloctadecane-oxypolysiloxane and poly(dimethylsiloxy)-stearoxysiloxane, stearic acid monoethanolamine, colophane and derivatives thereof, such as glycol abietates and glycerol abietates, hydrogenated oils that are solid at 25°C, sugar glycerides and oleates, myristates, lanolates, stearates and dihydroxystearates of calcium, magnesium, zirconium and aluminium.
The fatty component may also consist of a mixture of at least one wax and at least one oil, in which case the following oils, for example, are suitable: paraffin oil, purcelline oil, perhydrosqualene, sweet almond oil, avocado oil, calophyllum oil, castor oil, sesame oil, jojoba oil, mineral oils having a boiling point of about from 310 to 410°C, silicone oils, such as dimethylpolysiloxane, linoleyl alcohol, linolenyl alcohol, oleyl alcohol, cereal grain oils, such as wheatgerm oil, isopropyl lanolate, isopropyl palmitate, isopropyl myristate, butyl myristate, cetyl myristate, hexadecyl stearate, butyl stearate, decyl oleate, acetyl glycerides, octanoates and decanoates of alcohols and polyalcohols, for example of glycol and glycerol, ricinoleates of alcohols and polyalcohols, for example of cetyl alcohol, isostearyl alcohol, isocetyl lanolate, isopropyl adipate, hexyl laurate and octyl dodecanol.
The fatty components in such preparations in the form of sticks may generally constitute up to 99.91 % by weight of the total weight of the preparation.
The cosmetic preparations and formulations according to the invention may additionally comprise further constituents, such as, for example, glycols, polyethylene glycols, polypropylene glycols, monoalkanolamides, non-coloured polymeric, inorganic or organic fillers, preservatives, UV filters or other adjuvants and additives customary in cosmetics, for example a natural or synthetic or partially synthetic di- or tri-glyceride, a mineral oil, a silicone oil, a wax, a fatty alcohol, a Guerbet alcohol or ester thereof, a lipophilic functional cosmetic active ingredient, including sun-protection filters, or a mixture of such substances.
A lipophilic functional cosmetic active ingredient suitable for skin cosmetics, an active ingredient composition or an active ingredient extract is an ingredient or a mixture of ingredients that is approved for dermal or topical application. The following may be mentioned by way of example:
- active ingredients having a cleansing action on the skin surface and the hair; these include all substances that serve to cleanse the skin, such as oils, soaps, synthetic detergents and solid substances;
- active ingredients having a deodorising and perspiration-inhibiting action: they include antiperspirants based on aluminium salts or zinc salts, deodorants comprising bactericidal or bacteriostatic deodorising substances, for example triclosan, hexachlorophene, alcohols and cationic substances, such as, for example, quaternary ammonium salts, and odour absorbers, for example ^{®}Grillocin (combination of zinc ricinoleate and various additives) or triethyl citrate (optionally in combination with an antioxidant, such as, for example, butyl hydroxytoluene) or ion-exchange resins;
- active ingredients that offer protection against sunlight (UV filters): suitable active ingredients are filter substances (sunscreens) that are able to absorb UV radiation from sunlight and convert it into heat; depending on the desired action, the following light-protection agents are preferred: light-protection agents that selectively absorb sunburncausing high-energy UV radiation in the range of approximately from 280 to 315 nm (UV-B absorbers) and transmit the longer-wavelength range of, for example, from 315 to 400 nm (UV-A range), as well as light-protection agents that absorb only the longerwavelength radiation of the UV-A range of from 315 to 400 nm (UV-A absorbers);
   suitable light-protection agents are, for example, organic UV absorbers from the class of the p-aminobenzoic acid derivatives, salicylic acid derivatives, benzophenone derivatives, dibenzoylmethane derivatives, diphenyl acrylate derivatives, benzofuran derivatives, polymeric UV absorbers comprising one or more organosilicon radicals, cinnamic acid derivatives, camphor derivatives, trianilino-s-triazine derivatives, phenyl-benzimidazolesulfonic acid and salts thereof, menthyl anthranilates, benzotriazole derivatives, and/or an inorganic micropigment selected from aluminium oxide- or silicon dioxide-coated TiO₂, zinc oxide or mica;
- active ingredients against insects (repellents) are agents that are intended to prevent insects from touching the skin and becoming active there; they drive insects away and evaporate slowly; the most frequently used repellent is diethyl toluamide (DEET); other common repellents will be found, for example, in "Pflegekosmetik" (W. Raab and U. Kindl, Gustav-Fischer-Verlag Stuttgart/New York, 1991) on page 161;
- active ingredients for protection against chemical and mechanical influences: these include all substances that form a barrier between the skin and external harmful substances, such as, for example, paraffin oils, silicone oils, vegetable oils, PCL products and lanolin for protection against aqueous solutions, film-forming agents, such as sodium alginate, triethanolamine alginate, polyacrylates, polyvinyl alcohol or cellulose ethers for protection against the effect of organic solvents, or substances based on mineral oils, vegetable oils or silicone oils as "lubricants" for protection against severe mechanical stresses on the skin;
- moisturising substances: the following substances, for example, are used as moisture-controlling agents (moisturisers): sodium lactate, urea, alcohols, sorbitol, glycerol, propylene glycol, collagen, elastin and hyaluronic acid;
- active ingredients having a keratoplastic effect: benzoyl peroxide, retinoic acid, colloidal sulfur and resorcinol;
- antimicrobial agents, such as, for example, triclosan or quaternary ammonium compounds;
- oily or oil-soluble vitamins or vitamin derivatives that can be applied dermally: for example vitamin A (retinol in the form of the free acid or derivatives thereof), panthenol, pantothenic acid, folic acid, and combinations thereof, vitamin E (tocopherol), vitamin F; essential fatty acids; or niacinamide (nicotinic acid amide);
- vitamin-based placenta extracts: active ingredient compositions comprising especially vitamins A, C, E, B₁, B₂, B₆, B₁₂, folic acid and biotin, amino acids and enzymes as well as compounds of the trace elements magnesium, silicon, phosphorus, calcium, manganese, iron or copper;
- skin repair complexes: obtainable from inactivated and disintegrated cultures of bacteria of the bifidus group;
- plants and plant extracts: for example arnica, aloe, beard lichen, ivy, stinging nettle, ginseng, henna, camomile, marigold, rosemary, sage, horsetail or thyme;
- animal extracts: for example royal jelly, propolis, proteins or thymus extracts;
- cosmetic oils that can be applied dermally: neutral oils of the Miglyol 812 type, apricot kernel oil, avocado oil, babassu oil, cottonseed oil, borage oil, thistle oil, groundnut oil, gamma-oryzanol, rosehip-seed oil, hemp oil, hazelnut oil, blackcurrant-seed oil, jojoba oil, cherry-stone oil, salmon oil, linseed oil, cornseed oil, macadamia nut oil, almond oil, evening primrose oil, mink oil, olive oil, pecan nut oil, peach kernel oil, pistachio nut oil, rape oil, rice-seed oil, castor oil, saffl,ower oil, sesame oil, soybean oil, sunflower oil, tea tree oil, grapeseed oil or wheatgerm oil.
The preparations in stick form are preferably anhydrous but may in certain cases comprise a certain amount of water which, however, in general does not exceed 40 % by weight, based on the total weight of the cosmetic preparation.
If the cosmetic preparations and formulations according to the invention are in the form of semi-solid products, that is to say in the form of ointments or creams, they may likewise be anhydrous or aqueous. Such preparations and formulations are, for example, mascaras, eyeliners, foundations, blushers, eye-shadows, or compositions for treating rings under the eyes.
If, on the other hand, such ointments or creams are aqueous, they are especially emulsions of the water-in-oil type or of the oil-in-water type that comprise, apart from the pigment, from 1 to 98.8 % by weight of the fatty phase, from 1 to 98.8 % by weight of the aqueous phase and from 0.2 to 30 % by weight of an emulsifier.
Such ointments and creams may also comprise further conventional additives, such as, for example, perfumes, antioxidants, preservatives, gel-forming agents, UV filters, colorants, pigments, pearlescent agents, non-coloured polymers as well as inorganic or organic fillers. If the preparations are in the form of a powder, they consist substantially of a mineral or inorganic or organic filler such as, for example, talcum, kaolin, starch, polyethylene powder or polyamide powder, as well as adjuvants such as binders, colorants etc..
Such preparations may likewise comprise various adjuvants conventionally employed in cosmetics, such as fragrances, antioxidants, preservatives etc..
If the cosmetic preparations and formulations according to the invention are nail varnishes, they consist essentially of nitrocellulose and a natural or synthetic polymer in the form of a solution in a solvent system, it being possible for the solution to comprise other adjuvants, for example pearlescent agents.
In that embodiment, the coloured polymer is present in an amount of approximately from 0.1 to 5 % by weight.
The cosmetic preparations and formulations according to the invention may also be used for colouring the hair, in which case they are used in the form of shampoos, creams or gels that are composed of the base substances conventionally employed in the cosmetics industry and a pigment according to the invention.
The cosmetic preparations and formulations according to the invention are prepared in conventional manner, for example by mixing or stirring the components together, optionally with heating so that the mixtures melt.

Various features and aspects of the present invention are illustrated further in the examples that follow. While these examples are presented to show one skilled in the art how to operate within the scope of this invention, they are not to serve as a limitation on the scope of the invention where such scope is only defined in the claims. Unless otherwise indicated in the following examples and elsewhere in the specification and claims, all parts and percentages are by weight, temperatures are in degrees centigrade and pressures are at or near atmospheric.

### Examples

### Example 1

50g TiO₂ coated mica - CIBA XYMARA™ Silver Pearl S03 (ex CIBA SC) - are dispersed in 500ml water. The suspension is heated to 75°C. A solution of 1.96g AlCl₃ dissolved in 200 ml water is added at 4ml/min with a dosing pump. The suspension is maintained at pH 3 by compensation of the pH with a solution of NaOH (at 1%). The suspension is kept for 30 min at pH 3. Then the pH of the suspension is increased to pH 7 with the 1% NaOH solution. The suspension is kept for 30 min at pH 7. A solution of 0.5g CIBA EFKA 8512 (100% active substance) dissolved in 50ml water is added. The suspension is then kept for 60 min at pH 7. The suspension is filtrated; the pigment is recovered, washed with water and dried overnight at 120°C in an oven.

### Example 2

50g TiO₂ coated mica - CIBA XYMARA™ Silver Pearl S03 (ex CIBA SC) - are dispersed in 500ml water. The suspension is heated to 75°C. A solution of 5.76g ZrOCl₂·8H₂O AlCl₃ dissolved in 290 ml water is added at 4ml/min with a dosing pump. The suspension is maintained at pH 3 by compensation of the pH with the solution of NaOH (at 1%). The suspension is kept for 30 min at pH 3. Then the pH of the suspension is increased to pH 7 with the 1 % NaOH solution. The suspension is kept for 30 min at pH 7. A solution of 0.5g CIBA EFKA 8512 (100% active substance) dissolved in 50ml water is added. The suspension is then kept for 60 min at pH7. The suspension is filtrated; the pigment is recovered, washed with water and dried overnight at 120°C in an oven.

### Example 3

50g TiO₂ (SnO₂) coated mica - CIBA XYMARA™ Dual Pearl D25 (ex CIBA SC) - are dispersed in 500ml water. The suspension is heated to 75°C. A solution of 5.76g ZrOCl₂·8H₂O AlCl₃ dissolved in 300 ml water is added at 4ml/min with a dosing pump. The suspension is maintained at pH 3 by compensation of the pH with the solution of NaOH (at 1%). The suspension is kept for 30 min at pH 3. Then the pH of the suspension is increased to pH 7 with the 1 % NaOH solution. The suspension is kept for 30 min at pH 7. A solution of 0.5g CIBA EFKA 8512 (100% active substance) dissolved in 50ml water is added. The suspension is then kept for 60 min at pH 7. The suspension is filtrated; the pigment is recovered, washed with water and dried overnight at 120°C in an oven.

### Example 4

50g TiO₂ coated mica - CIBA XYMARA™ Silver Pearl S23 (ex CIBA SC) - are dispersed in 500ml water. The suspension is heated to 75°C. A solution of 1.96g AlCl₃ dissolved in 200 ml water is added at 4ml/min with a dosing pump. The suspension is maintained at pH 3 by compensation of the pH with the solution of NaOH (at 1%). The suspension is kept for 30 min at pH 3. Then the pH of the suspension is increased to pH 7 with the 1 % NaOH solution. The suspension is kept for 30 min at pH 7. A solution of 0.5g CIBA EFKA 8512 (100% active substance) dissolved in 50ml water is added. The suspension is then kept for 60 min at pH 7. The suspension is filtrated; the pigment is recovered, washed with water and dried overnight at 120°C in an oven.

### Example 5 (copolymer vinyl phophonic acid acrylic acid)

50g TiO₂ coated mica - XYMARA™ Silver Pearl S03 (ex CIBA SC) - are dispersed in 500ml water. The suspension is heated to 75°C. A solution of 0.98g AlCl₃ dissolved in 200 ml water is added at 4ml/min with a dosing pump. The suspension is maintained at pH 3 by compensation of the pH with the solution of NaOH (at 1 %). The suspension is kept for 30 min at pH 3. A solution of 2.88g ZrOCl₂.8H₂O AlCl₃ dissolved in 300 ml water is added at 4ml/min with a dosing pump within 1.2h, the pH of the suspension being maintained at 3 by compensation with the solution of NaOH (at 1%). The suspension is kept again for 30 min at pH 3. Then the pH of the suspension is increased to pH 7 with the 1% NaOH solution. The suspension is kept for 30 min at pH7. A solution of 2.5g Albritect CP30 (20% active substance) (ex Rhodia) dissolved in 200ml water is added. The pH dropped to 5.4 and the suspension is kept for 30 min at this pH. The suspension was filtrated; the pigment was recovered, washed with water and dried overnight at 120°C in an oven.

### Example 6-8 and 9-11

The examples 1 and 2 are reproduced using instead of CIBA EFKA 8512 the following:
- octylphosphonic acid
   0.8% RHODAFAC® ASI 80 (ex Rhodia) (80% active substance) 0.5g in 50ml water
- a mixture of mono- and di- phosphate esters based on alcohol ethoxylate in acid form 5% Phospholan® PR221T (ex AKZO-NOBEL) (25% active substance) 10g in 200ml water
- alkoholethoxylat phosphatester
   5% Phospholan® PE 169 (ex AKZO-NOBEL) (100% active substance) 2.5g in 200ml water

### Example 12

All samples from examples 1-11 are tested for photo-stability in a methylene blue test, in a water soaking test and an anti yellowing test, all samples show improvement against the non treated products.

### Example 13

50g TiO₂ coated mica - CIBA XYMARA™ Silver Pearl S19 (ex CIBA SC) - are dispersed in 500ml water. The suspension is heated to 75°C. A solution of 2.61g of ZrOCl₂ à 1% in water is added at 4ml/min with a dosing pump. Similarly a solution of 1.30g AlCl₃ dissolved in 130 ml water is added at 4ml/min with a dosing pump. Then a solution of 0.42g ZnCl₂ à 1 % in water is added at 4ml/min with a dosing pump. The suspension is constantly maintained at pH 3 by compensation of the pH with a solution of NaOH (at 1%). The suspension is kept for 30 min at pH 3. Then the pH of the suspension is increased to pH 7 with the 1% NaOH solution. The suspension is kept for 30 min at pH 7. A solution of 0.5g CIBA EFKA 8512 (100% active substance) dissolved in 50ml water is added. The suspension is then kept for 60 min at pH 7.
The suspension is filtrated; the pigment is recovered, washed with water and dried overnight at 120°C in an oven.

### Example 14

50g TiO₂ coated mica - CIBA XYMARA™ Silver Pearl S19 (ex CIBA SC) - are dispersed in 500ml water. The suspension is heated to 75°C. A solution of 2.61g of ZrOCl₂ à 1% in water is added at 4ml/min with a dosing pump. Similarly a solution of 1.30g AlCl₃ dissolved in 130 ml water is added at 4ml/min with a dosing pump. Then a solution of 2.10g MgCl₂.6H₂O à 1% in water is added at 4ml/min with a dosing pump. The suspension is constantly maintained at pH 3 by compensation of the pH with a solution of NaOH (at 1%). The suspension is kept for 30 min at pH 3. Then the pH of the suspension is increased to pH 7 with the 1% NaOH solution. The suspension is kept for 30 min at pH 7. A solution of 0.5g CIBA EFKA 8512 (100% active substance) dissolved in 50ml water is added. The suspension is then kept for 60 min at pH 7.
The suspension is filtrated; the pigment is recovered, washed with water and dried overnight at 120°C in an oven.

### Methylene Blue Test

The photocatalytic activity of the samples is evaluated by photo-degradation of methylene blue: 50 mg of effect pigment in 5 g water are stirred by a magnetic stirrer in the presence of 1 drop of methylene blue solution and exposed to light. A comparison sample is prepared and agitated at the same time under light exclusion. Colour changes of the samples are evaluated each half hour (4x) with regard to the comparison sample.

### Anti Yellowing Test

Determination of the yellow index was performed by incorporating the titanium dioxide-coated mica in high density polyethylene (HDPE) step chips with an antioxidant, butylated hydroxytoluene (BHT), and exposing the step chips to UV light in a QUV meter. The yellowing which occurred was monitored by obtaining the Yellow Index as measured on a Hunter LabScan meter.

### Water Soaking Test

### Millbase:

| **Product** | **% by wt.** |
|---|---|
| 1-Butanol | 4.00 |
| Baysilone MA | 0.035 |
| Buylglycolacetate | 4.00 |
| Setal 84XX-70 | 42.93 |
| Setamine US138BB70 | 16.66 |
| Solvesso 100 | 32.36 |
| Sum | 99.99 |

### Let Down:

| **Product** | **% by wt.** |
|---|---|
| 1-Butanol | 5.14 |
| Baysilone MA | 0.045 |
| Buylglycolacetate | 2.57 |
| Setal 84XX-70 | 55.06 |
| Setamine US138BB70 | 21.39 |
| Solvesso 100 | 15.79 |
| Sum | 100.00 |

Millbase and Let Down are mixed well in a ratio of 30:70. 0.2 g of the titanium dioxide-coated mica and 9.8 g of the blend are continuously stirred on a magnet stirrer. The resin/pigment dispersion is drawn down onto a Leneta black and white chart (panel) from the Leneta Company using a wet film applicator. The film is flashed in a flash cabinet for 30 minutes and then "baked" in an oven at 130°C for 30 minutes.
Before water soak all initial values for color, gloss, haze and DOI are measured.
The panels are used in landscape format. On their reverse a line is drawn 5 cm from the bottom side of the panels, this side will be under water.
The test is implemented at 2 different conditions:
1. 60°C for 16 h
2. 80°C for 8 h
The panels are placed into the panel holder in the aluminium pot. The pot is then filled with demineralised water up to the line drawn on the panels (5 cm deep); fresh water is used for every test. The pot is closed and the thermostat placed through the hole in the lid into the water and set for either 60°C or 80°C. Once the temperature is reached, the time is taken. After completion of the test cycle the equipment is switched off and the panels are removed from the water bath. Water drops are wiped off the panels and the panels are kept for 2 h at room temperature before measuring color, gloss, haze and DOI on the soaked side.

## Claims

1. A pigment based on (multiple) coated platelet-shaped substrates comprising
(A) platelet-shaped substrate;
(B) a titanium dioxide layer;
(C) an outer layer on top of layer (B) which is obtained by treatment with a metal oxide/hydroxide and then a phosphate ester or phosphonate or a salt thereof, wherein the metal oxide/hydroxide is selected from oxides/hydroxides of silicon (silicon oxide, silicon oxide hydrate), aluminium, zirconium, magnesium, calcium, iron(III), yttrium, cerium, zinc and combinations thereof;
with the proviso that the phosphate ester, or phosphonate do not contain fluorine.

2. The pigment according to claim 1, wherein the metal oxide/hydroxide is a ternary mixture of zirconium oxide, aluminium oxide and zinc oxide, or zirconium oxide, aluminum oxide and magnesium, oxide.

3. The pigment according to claim 1, wherein the metal oxide/hydroxide is an oxide/hydroxide of aluminium (aluminum oxide, aluminum oxide hydrate), zirconium (hydrated) zirconium dioxide), or a mixture thereof.

4. The pigment according to claim 2, or 3, wherein the metal oxide/hydroxide is present in an amount of from 0.1 to 10 % by weight, preferably 0.8 to 4 % by weight based on the weight of the (multiple) coated platelet-shaped substrates.

5. The pigment according to claim 1, wherein the phosphate ester is a phosphate ester (phosphoric acid ester) of polyC₂-C₄alkylene glycolmonoethers and/or a polyC₂-C₄alkylene glycol monoester of a carboxylic acid, or a polyoxyethylenated alkyl ether phosphate.

6. The pigment according to claim 5, wherein the phosphate ester is a polyoxyethylenated alkyl phosphate of formula: 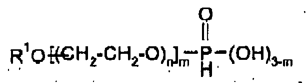 or a salt thereof, wherein R¹, which may be identical or different in each occuring, represents a linear or branched alkyl radical, in particular of 1 to 20 carbon atoms; a phenyl radical; an alkylaryl radical, more particularly an alkylphenyl radical, with in particular, an alkyl chain of 8 to 12 carbon atoms; an arylalkyl radical, more particularly a phenylaryl radical; it being possible for n, the number of ethylene oxides, to range from 2 to 12, for example, and m is 1, 2, or 3.

7. The pigment according to claim 6, wherein R¹ is a hexyl, octyl, decyl, dodecyl, oleyl or nonylphenyl radical.

8. The pigment according to claim 6, wherein n is 6, 7, or 8, R¹ is methyl and m is 1, or 2,

9. The pigment according to claim 1, wherein the phosphate ester, or phosphonate is an alkyl or alkylaryl phosphate ester, or a polyarylpolyetherphosphate, or an alkyl phosphonic acid, or a polymer of polyvinyl-methylphosphinic acid and, in particular, polyvinyl-phosphonic acid, including copolymers of vinylphosphonic acid and/or vinylmethylphosphinic acid with other monomers, such as acrylic acid, acrylamide and vinyl acetate. .

10. A process for producing the pigment according to claim 1, **characterized in that**
(a) a flaky (pearl pigment) is suspended in water, the pH of the suspension is adjusted to about 3, then an aqueous solution of one or more metals salts selected from silicon, aluminium, zinc, calcium, magnesium, zirconium, iron(III), yttrium and cerium is added to the suspension while keeping its pH constant with an aqueous alkali solution, and after addition, its pH is adjusted to about 7 to 8.5, and
(b) an aqueous solution of the phosphate ester, or phosphonate or salts thereof is added to the resulting suspension under stirring, and after addition, its suspension is filtered, washed with water and dried.

11. Use of a pigment according to one of claims 1 to 9 in paints, lacquers, printing inks, powder coatings, paper coatings, plastics, cosmetics, inks, glazes for ceramics and glasses, decorative applications for foods and drugs and security-enhancing features.

12. Paints, lacquers, printing inks, powder coatings, paper coatings, plastics; cosmetics, inks, glazes for ceramics and glasses, comprising the pigment according to any of claims 1 to 9.

## Patentansprüche

1. Pigment, basierend auf (mehrfach) beschichteten Plättchen-förmigen Substraten, umfassend
(A) Plättchen-förmiges Substrat;
(B) eine Titandioxid-Schicht;
(C) eine äußere Schicht auf dem Oberen von Schicht (B), die durch Behandlung mit einem Metalloxid / -hydroxid und dann einem Phosphatester oder Phosphonat oder einem Salz davon erhalten wird, wobei das Metalloxid / -hydroxid ausgewählt ist aus Oxiden / Hydroxiden von Silizium (Siliziumoxid, Siliziumoxidhydrat), Aluminium, Zirkonium, Magnesium, Calcium, Eisen(III), Yttrium, Cer, Zink und Kombinationen davon;
mit der Maßgabe, dass der Phosphatester oder das Phosphonat kein Fluor enthält.

2. Pigment nach Anspruch 1, wobei das Metalloxid / -hydroxid ein ternäres Gemisch von Zirkoniumoxid, Aluminiumoxid und Zinkoxid, oder Zirkoniumoxid, Aluminiumoxid und Magnesiumoxid ist.

3. Pigment nach Anspruch 1, wobei das Metalloxid / -hydroxid ein Oxid/Hydroxid von Aluminium (Aluminiumoxid, Aluminiumoxidhydrat), Zirkonium ((hydratisiertes) Zirkoniumdioxid) oder einem Gemisch davon ist.

4. Pigment nach Anspruch 2 oder 3, wobei das Metalloxid / -hydroxid in einer Menge von 0,1 bis 10 Gew.-%, vorzugsweise 0,8 bis 4 Gew.-%, basierend auf dem Gewicht der (mehrfach) beschichteten Plättchen-förmigen Substrate, vorliegt.

5. Pigment nach Anspruch 1, wobei der Phosphatester ein Phosphatester (Phosphorsäureester) von Poly-C₂-C₄-alkylenglycolmonoethern und/oder einem Poly-C₂-C₄-alkylenglycolmonoeester einer Carbonsäure oder ein polyoxyethyleniertes Alkyletherphosphat ist.

6. Pigment nach Anspruch 5, wobei der Phosphatester ein polyoxyethyleniertes Alkylphosphat der Formel 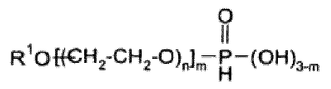 oder ein Salz davon ist, worin R¹, das bei jedem Vorkommen gleich oder verschieden sein kann, einen linearen oder verzweigten Alkyl-Rest, insbesondere mit 1 bis 20 Kohlenstoff-Atomen; einen Phenyl-Rest; einen AlkylarylRest, vor allem einen Alkylphenyl-Rest, mit insbesondere einer Alkyl-Kette mit 8 bis 12 Kohlenstoff-Atomen; einen Arylalkyl-Rest, vor allem einen Phenylaryl-Rest, wiedergibt, wobei es möglich ist, dass n, die Zahl von Ethylenoxiden, im Bereich von zum Beispiel 2 bis 12 liegt und m 1, 2 oder 3 ist.

7. Pigment nach Anspruch 6, wobei R¹ ein Hexyl-, Octyl-, Decyl-, Dodecyl-, Oleyl- oder Nonylphenyl-Rest ist.

8. Pigment nach Anspruch 6, wobei n 6, 7 oder 8 ist, R¹ Methyl darstellt und m 1 oder 2 ist.

9. Pigment nach Anspruch 1, wobei der Phosphatester oder Phosphonat ein Alkyl- oder Alkylarylphosphatester oder ein Polyarylpolyetherphosphat oder eine Alkylphosphonsäure oder ein Polymer von Polyvinylmethylphosphinsäure und insbesondere Polyvinylphosphonsäure, einschließlich Copolymere von Vinylphosphonsäure und/oder Vinylmethylphosphinsäure mit anderen Monomeren, wie Acrylsäure, Acrylamid und Vinylacetat, ist.

10. Verfahren zur Herstellung des Pigments nach Anspruch 1, **dadurch gekennzeichnet, dass** (a) ein flockiges bzw. schuppenförmiges (Perl-Pigment) in Wasser suspendiert wird, der pH-Wert der Suspension auf etwa 3 eingestellt wird, dann eine wässrige Lösung von einem oder mehreren Metall-Salzen, ausgewählt aus Silizium, Aluminium, Zink, Calcium, Magnesium, Zirkonium, Eisen(III), Yttrium und Cer, zu der Suspension gegeben wird unter KonstantHalten ihres pH-Werts mit einer wässrigen Alkali-Lösung, und nach Zugabe ihr pH-Wert auf etwa 7 bis 8,5 eingestellt wird, und
(b) eine wässrige Lösung des Phosphatesters oder Phosphonats oder Salzen davon zu der erhaltenen Suspension unter Rühren gegeben wird, und nach Zugabe ihre Suspension filtriert, mit Wasser gewaschen und getrocknet wird.

11. Verwendung eines Pigments nach einem der Ansprüche 1 bis 9 in Anstrichstoffen, Lacken, Druckfarben, Pulver-Beschichtungen, Papier-Beschichtungen, Kunststoffen, Kosmetika, Tinten, Glasuren für Keramik und Gläser, dekorativen Anwendungen für Nahrungsmittel und Arzneistoffe und die Sicherheit erhöhenden Merkmalen.

12. Anstrichstoffe, Lacke, Druckfarben, Pulver-Beschichtungen, Papier-Beschichtungen, Kunststoffe, Kosmetika, Tinten, Glasuren für Keramik und Gläser, umfassend das Pigment nach einem der Ansprüche 1 bis 9.

## Revendications

1. Pigment basé sur des (multiples) substrats en forme de plaquettes revêtus comprenant
(A) un substrat en forme de plaquette ;
(B) une couche de dioxyde de titane ;
(C) une couche externe au-dessus de la couche (B) qui est obtenue par traitement avec un oxyde/hydroxyde métallique puis un ester de phosphate, ou un phosphonate, ou un sel de ceux-ci,
l'oxyde/hydroxyde métallique étant choisi parmi les oxydes/hydroxydes de silicium (oxyde de silicium, oxyde de silicium hydraté), aluminium, zirconium, magnésium, calcium, fer (III), yttrium, cérium, zinc, et combinaisons de ceux-ci ;
à condition que l'ester de phosphate ou le phosphonate ne contienne pas de fluor.

2. Pigment selon la revendication 1, dans lequel l'oxyde/hydroxyde métallique est un mélange ternaire d'oxyde de zirconium, dioxyde d'aluminium et d'oxyde de zinc, ou d'oxyde de zirconium, d'oxyde d'aluminium et d'oxyde de magnésium.

3. Pigment selon la revendication 1, dans lequel l'oxyde/hydroxyde métallique est un oxyde/hydroxyde d'aluminium (oxyde d'aluminium, oxyde d'aluminium hydraté), zirconium (dioxyde de zirconium (hydraté)), ou un mélange de ceux-ci.

4. Pigment selon la revendication 2 ou 3, dans lequel l'oxyde/hydroxyde métallique est présent dans une quantité de 0,1 à 10 % en poids, de préférence 0,8 à 4 % en poids, rapporté au poids des (multiples) substrats en forme de plaquettes revêtus.

5. Pigment selon la revendication 1, dans lequel l'ester de phosphate est un ester de phosphate (ester d'acide phosphorique) de monoéthers de poly(alkylène en C₂-C₄) glycol et/ou un monoester de poly(alkylène en C₂-C₄) glycol d'un acide carboxylique, ou un phosphate d'éther alkylique polyoxyéthyléné.

6. Pigment selon la revendication 5, dans lequel l'ester de phosphate est un phosphate d'alkyle polyoxyéthyléné de formule : 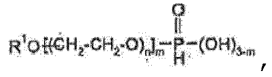 ou un sel de celui-ci, dans lequel R¹, qui peut être identique ou différent à chaque occurrence, représente un radical alkyle linéaire ou ramifié, en particulier de 1 à 20 atomes de carbone ; un radical phényle ; un radical alkylaryle, plus particulièrement un radical alkylphényle, avec en particulier une chaîne alkyle de 8 et 12 atomes de carbone ; un radical arylalkyle, plus particulièrement un radical phénylaryle ; n, le nombre d'oxydes d'éthylène, peut aller de 2 à 12, par exemple, et m vaut 1, 2 ou 3.

7. Pigment selon la revendication 6, dans lequel R¹ est un radical hexyle, octyle, décyle, dodécyle, oléyle ou nonylphényle.

8. Pigment selon la revendication 6, dans lequel n vaut 6, 7 ou 8, R¹ est un méthyle et m vaut 1 ou 2.

9. Pigment selon la revendication 1, dans lequel l'ester de phosphate ou le phosphonate est un ester de phosphate d'alkyle ou d'alkylaryle, ou un polyarylpolyétherphosphate, ou un acide alkylphosphonique, ou un polymère d'acide polyvinyl-méthylphosphinique, et en particulier d'acide polyvinyl-phosphonique, notamment les copolymères d'acide vinylphosphonique et/ou d'acide vinylméthylphosphinique avec d'autres monomères tels que l'acide acrylique, l'acrylamide et l'acétate de vinyle.

10. Procédé de production du pigment selon la revendication 1, **caractérisé en ce que**
(a) un pigment (nacré) en paillettes est mis en suspension dans de l'eau, le pH de la suspension est ajusté à environ 3, puis une solution aqueuse d'un ou plusieurs sels de métaux choisis parmi le silicium, l'aluminium, le zinc, le calcium, le magnésium, le zirconium, le fer (III), l'yttrium et le cérium est ajoutée à la suspension tout en maintenant son pH constant avec une solution aqueuse alcaline, et après addition, son pH est ajusté à environ 7 à 8,5, et
(b) une solution aqueuse de l'ester de phosphate, ou de phosphonate, ou de sels de ceux-ci est ajoutée à la suspension résultante sous agitation, et après addition, sa suspension est filtrée, lavée à l'eau et séchée.

11. Utilisation d'un pigment selon une des revendications 1 à 9 dans des peintures, des laques, des encres d'impression, des revêtements en poudre, des revêtements de papier, des plastiques, des cosmétiques, des encres, des glaçures pour céramiques et verres, des applications décoratives pour aliments et médicaments et des éléments renforçant la sécurité.

12. Peintures, laques, encres d'impression, revêtements en poudre, revêtements de papier, plastiques, cosmétiques, encres, glaçures pour céramiques et verres, comprenant le pigment selon l'une quelconque des revendications 1 à 9.
